# EUROPÄISCHE PATENTSCHRIFT

(11) **EP 1 599 686 B1**
(45) Veröffentlichungstag und Bekanntmachung des Hinweises auf die Patenterteilung: **17.03.2010**
(21) Anmeldenummer: 04706635.2
(22) Anmeldetag: 30.01.2004
(51) Int. Cl.: F16H 55/34

(54) **REIBRADGETRIEBE FÜR EIN VON EINEM AGGREGATE-RIEMENTRIEB EINER BRENNKRAFTMASCHINE GESONDERT ANGEORDNETES NEBENAGGREGAT**
FRICTION DRIVE FOR THE SEPARATE AUXILIARY GROUP OF A BELT DRIVE FOR AN INTERNAL COMBUSTION ENGINE
ENGRENAGE PAR FRICTION DESTINEE A UN GROUPE AUXILIAIRE SEPARE D'UN ENTRAINEMENT PAR COURROIE DE GROUPE D'UN MOTEUR A COMBUSTION INTERNE

(30) Priorität: 03.03.2003 DE 10309062
(43) Veröffentlichungstag der Anmeldung: 30.11.2005
(73) Patentinhaber: Bayerische Motoren Werke Aktiengesellschaft, 80809 München (DE)
(72) Erfinder: WIMMER, Rudolf, A-4431 Haidershofen (AT); WIESER, Philipp, A-4521 Schiedlberg (AT); LEMBERGER, Heinz, 85774 Unterföhring (DE)
(86) Internationale Anmeldenummer: PCT/EP2004/000849
(87) Internationale Veröffentlichungsnummer: WO 2004/079229

(56) Entgegenhaltungen:
- EP-A- 0 927 834
- DE-A- 3 934 884
- DE-C- 492 380
- DE-C- 837 946
- DE-C- 933 840
- DE-C- 961 318
- FR-A- 1 172 119
- US-A- 3 347 107

## Beschreibung

Die Erfindung bezieht sich auf ein Reibrad eines Reibradgetriebes für von einem Aggregate - Riementrieb einer Brennkraftmaschine gesondert angeordnetes Nebenaggregat, wobei das Reibrad über eine Lauffläche einerseits mit der Außenseite des Riementrieb- Riemens und andererseits mit einem Antriebsrad des Nebenaggregates in reibschlüssiger Antriebsverbindung steht.

Eine derartige Reibrad- Anordnung ist z.B. in der noch nicht veröffentlichten Patentanmeldung- P 102 55 074 gezeigt und beschrieben, wobei das Reibrad mittels eines exzentergesteuerten Schwingarmes in permanentem Eingriff mit dem Riemen und dem Antriebsrad gehalten ist. In den weiteren noch nicht veröffentlichten Patentanmeldungen P 102 55 075 und P 102 55 073, jeweils betreffend eine Steuerung des Reibrades zur Aufrechterhaltung oder zur Unterbrechung der Antriebsverbindung mit dem Antriebsrad des Nebenaggregates mittels eines auf unterschiedliche Weise gesteuerten Exzenters, sind ebenfalls die Außenseite des jeweiligen Riemens als auch die jeweiligen Laufflächen der gezeigten Reibräder glatt bzw. nicht profiliert dargestellt.

Aus der US 2 075 865 ist ein Reibradgetriebe für einen Anlasser einer Brennkraftmaschine bekannt, wobei mit einem eine V-förmige Rille aufweisenden Anlasserkranz entsprechend profilierte Reibrollen zum formschlüssigen Eingriff beim Start zusammenwirken. Im Sinne eines derartigen formschlüssigen Eingriffes ist in der gegenüber den weiter vorne genannten Anmeldungen früheren, ebenfalls noch nicht veröffentlichten deutschen Patentanmeldung P 102 36 746 ein an der Außenseite profilierter Riemen zum formschlüssigen Eingriff eines profilierten Reibrades beschrieben.

Derartige Profilierungen an Reibrad und Außenseite des Riemens sind in nachteiliger Weise aufwändig und somit kostenintensiv. Des weiteren sind solche Profilierungen aufgrund von Verschleiß wenig geeignet für Steuerungen des Reibrades in und außer Eingriff mit dem Antriebsrad, wobei das zu steuernde Reibrad zur Unterbrechung der Antriebsverbindung mit dem Antriebsrad in Längsrichtung des Riemens bewegt ist, wie in den vorgenannten Anmeldungen P 102 55 073 und P 102 55 075 angebeben. Eine Profilierung lediglich an einem der beiden Reibpartner ist zwar weniger aufwändig, jedoch mit einem starken Verschleiß verbunden.

Bei den in den vorgenannten deutschen Anmeldungen gezeigten Reibrad-Anordnungen wirkt das jeweilige Reibrad über eine glatte Lauffläche mit einer im wesentlichen glatten Außenseite des jeweiligen Riemens zusammen, wobei eine zwischen die Kontaktflächen der Reibpartner gelangende Flüssigkeit durch Reduzierung des Reibbeiwertes die Antriebsverbindung ungünstig beeinflusst. Des weiteren kann der Riemen insbesondere durch ein geringfügig taumelndes Triebrad zu Kippbewegungen angeregt sein, die bei einem Reibrad mit glatter, zylindrischer Lauffläche zu nachteiligen Kantenpressungen führen.

DE- A1-3934884 offenbart die Merkmale des Oberbegriffs des Anspruchs 1. Der Erfindung liegt die Aufgabe zugrunde, die Lauffläche eines Reibrades derart zu gestatten, dass der Einfluss einer den Reibbeiwert reduzierender Flüssigkeit sowie der Einfluss von Kantenpressungen verursachenden Kippbewegungen des Riemens um seine Längachse vermindert sind.

Diese Aufgabe ist mit dem Patentanspruch 1 dadurch gelöst, dass das Reibrad am Außenumfang eines Radkörpers mit einem aus flüssigkeitsabstoßenden Gummi, Kunststoff oder Elastomer gebildeten Reifen ausgerüstet ist, dessen Lauffläche mittels zumindest einer Drainagenut in Laufflächenbereiche unterteilt ist, wobei ferner die Lauffläche in den Randbereichen bzw. Schultern des Reifens abgeschrägt oder verrundet ist.

Mit der Erfindung ist in vorteilhafter Weise ein Aquaplaning-Effekt im wesentlichen vermieden sowie ein materialschonendes Zusammenwirken von Riemen und Lauffläche des Reibrades erzielt.

In Weiterbildungen der Erfindung kann die Reibrad - Lauffläche durch mindestens eine in Umfangsrichtung des Reibrades verlaufend angeordnete Drainagenut oder mittels quer zur Umfangsrichtung des Reibrades verlaufend angeordneten Drainagenuten jeweils in getrennte Laufflächenbereiche unterteilt sein. Für eine wirksame Ableitung von Wasser und / oder Öl aus dem Kontaktbereich von Reibrad und Riemen ist die Reibrad - Lauffläche mittels einer Kombination mindestens einer in Umfangsrichtung verlaufenden Drainagenut mit dazu quer gerichtet angeordneten Drainagenuten in Laufflächenbereiche unterteilt. Dies schließt auch eine Ausgestaltung mit sich nicht kreuzenden Drainagenuten ein. Eine besonders wirksame Flüssigkeits - Ableitung ist bei einer Reibrad - Lauffläche erreicht, bei der mittels unterschiedlich gerichteten Drainagenuten in einer miteinander verbundenen bzw. kreuzenden Anordnung unterschiedliche Laufflächenbereiche mit einem Klotzprofil und / oder Streifenprofil gebildet sind. In Verbindung mit der Wahl eines flüssigkeitabstoßenden Materials für die Reibrad - Lauffläche bzw. des Reifens ist mit der letztgenannten Anordnung von Drainagenuten eine optimale Flüssigkeitsableitung bei hoher reibschlüssige Antriebsverbindung erzielt, wobei die Ableitung zusätzlich über die abgeschrägten oder verrundeten Schultern des die Lauffläche aufweisenden Reifens des Reibrades unterstützt ist.

Konkrete Ausgestaltungen der Erfindung sind in weiteren Ansprüchen angegeben.

Die Erfindung ist anhand von in der Zeichnung dargestellten Beispielen beschrieben. Es zeigt:
- Fig.1: ein stirnseitig an einer abschnittsweise gezeigten Brennkraftmaschine mit einem Riementrieb zusammenwirkend angeordnetes Reibradgetriebe für ein gesondert angeordnetes Nebenaggregat, z.B. Kühlmittelpumpe,
- Fig. 2: ein Reibrad des o.g. Reibradgetriebes mit einer Lauffläche, die durch mindestens eine in Umfangsrichtung des Reibrades verlaufend angeordnete Drainagenut in getrennte Laufflächenbereiche unterteilt ist,
- Fig.3: ein Reibrad mit einer Lauffläche, die mittels unterschiedlich gerichteten Drainagenuten in einer kreuzenden Anordnung einen Lauftlächenbereich mit einem Klotzprofil aufweist, und
- Fig.4: ein Reibrad mit einer Lauffläche, die mittels in Umfangsrichtung verlaufenden Drainagenuten in Kombination mit quer verlaufenden Drainagenuten in unterschiedliche Laufflächenbereiche mit einem Klotzprofil und einem Streifenprofil unterteilt ist.

In einem Riementrieb 1 für nicht gezeigte Aggregate einer nur abschnittsweise dargestellten Brennkraftmaschine 2 ist ein Reibradgetriebe 3 vorgesehen für ein vom Riementrieb 1 gesondert an der Brennkraftmaschine 2 angeordnetes Nebenaggregat 4, das vorzugsweise eine Kühlmittelpumpe für den Kühlkreislauf der Brennkraftmaschine 2 ist.

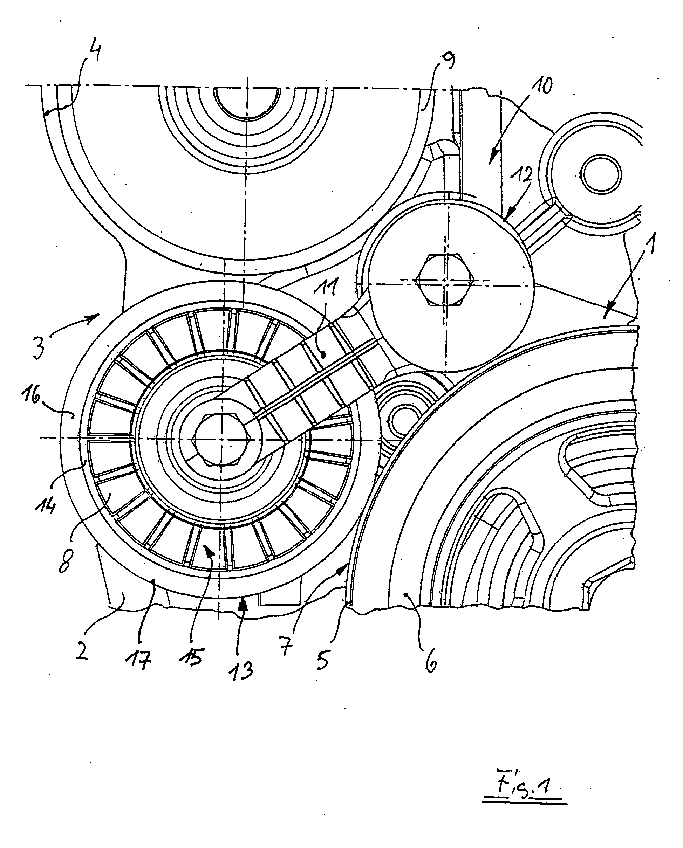

Das Reibradgetriebe 3 umfasst ein in einem Umschlingungsbereich des Riemens 5 eines kurbelwellenseitigen Triebrades 6 der Brennkraftmaschine 2 mit der Außenseite 7 des Riemens 5 reibschlüssig zusammenwirkendes Reibrad 8 und ein mit dem Reibrad 8 reibschlüssig antreibbares Antriebsrad 9 der Kühlmittelpumpe 4. Das Reibrad 8 ist mittels einer Steuereinrichtung 10 insbesondere bei einem Kaltstart der Brennkraftmaschine 2 außer Eingriff mit dem pumpenseitigen Antriebsrad 9 gesteuert, wie in Fig. 1 gezeigt.

Die maschinenseitig angeordnete Steuereinrichtung 10 umfasst z.B. einen gesteuert hub-/drehbeweglich antreibbaren, nicht ersichtlichen Exzenter, auf dem ein das Reibrad 8 führender Schwenkarm 11 mit einem Auge 12 schwenkbeweglich gelagert ist, wobei über den steuerbaren Exzenter und dem Schwenkarm11 das Reibrad 8 in und außer Eingriff mit dem Antriebsrad 9 gebracht ist. Die Steuereinrichtung 10 ist ferner mit einer vorgespannt angeordneten, nicht ersichtlichen Drehfeder ausgerüstet, die über das Auge 12 auf den Schwenkarm 11 derart drehend einwirkt, dass das Reibrad 8 über seine Lauffläche 13 bei jeder Verstellung relativ zum Antriebsrad 9 äquidistant auf der Außenseite 7 des Riemens 5 im Umschlingungsbereich des Triebrades 6 angedrückt geführt ist.

Um den nachteiligen Einfluss einer den Reibbeiwert reduzierenden Flüssigkeit zwischen den Kontaktflächen des Reibrades 8 und des Riemens 5 zu vermindern sowie am Reibrad Kantenpressungen verursachende Kippbewegungen des Riemens um die Riemenlängsachse insbesondere durch ein kurbelwellenseitig angetriebenes, taumelndes Triebrad, wird erfindungsgemäß vorgeschlagen, dass das jeweilige, in den Figuren 1 mit 4 gezeigte Reibrad 8,8',8", 8'" am Außenumfang 14 eines Radkörpers 15 mit einem aus flüssigkeitsabstoßenden Gummi, Kunststoff oder Elastomer gebildeten Reifen 16 ausgerüstet ist, dessen Lauffläche 13 mittels zumindest einer Drainagenut 18, 18'; 21, 22; 24, 25, 24'; 28,29 in Laufflächenbereiche unterteilt ist, wobei ferner die Lauffläche 13 in den Randbereichen bzw. Schultern 17 des Reifens 16 abgeschrägt oder verrundet ist.

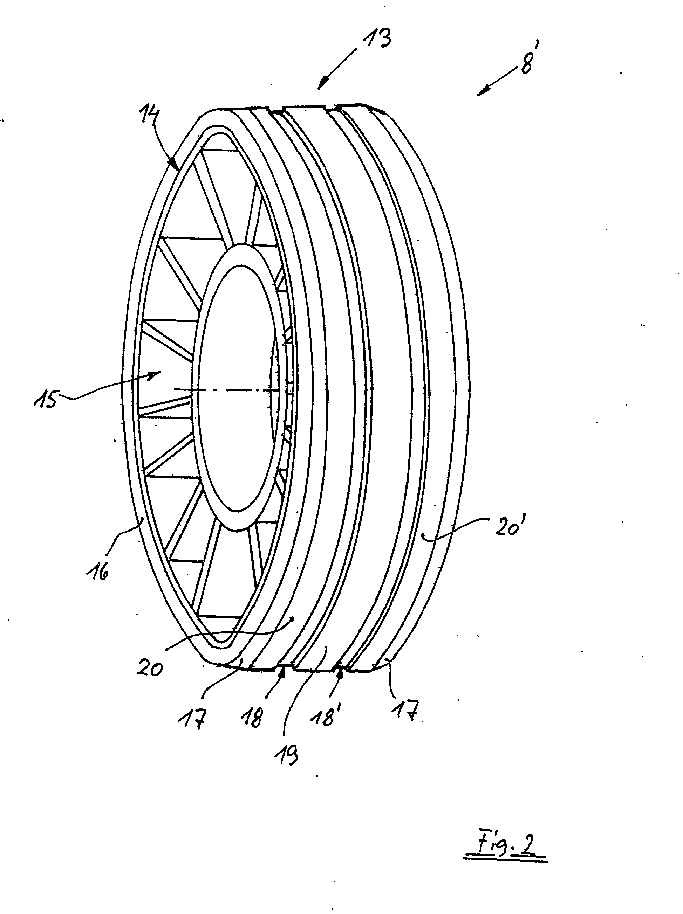

Gemäß einer einfachen Ausgestaltung der Erfindung nach Fig.2 ist die Lauffläche 13 des Reibrades 8' mittels zweier axial beabstandet angeordneter Umfangs - Drainagenuten 18, 18' in einen relativ breiten Mittelstreifen 19 und zwei relativ schmale Seitenstreifen 20,20' als jeweils ringförmige Laufflächenbereiche unterteilt. An die Seitenstreifen 20,20' schließt jeweils eine abgeschrägte Schulter 17 an.

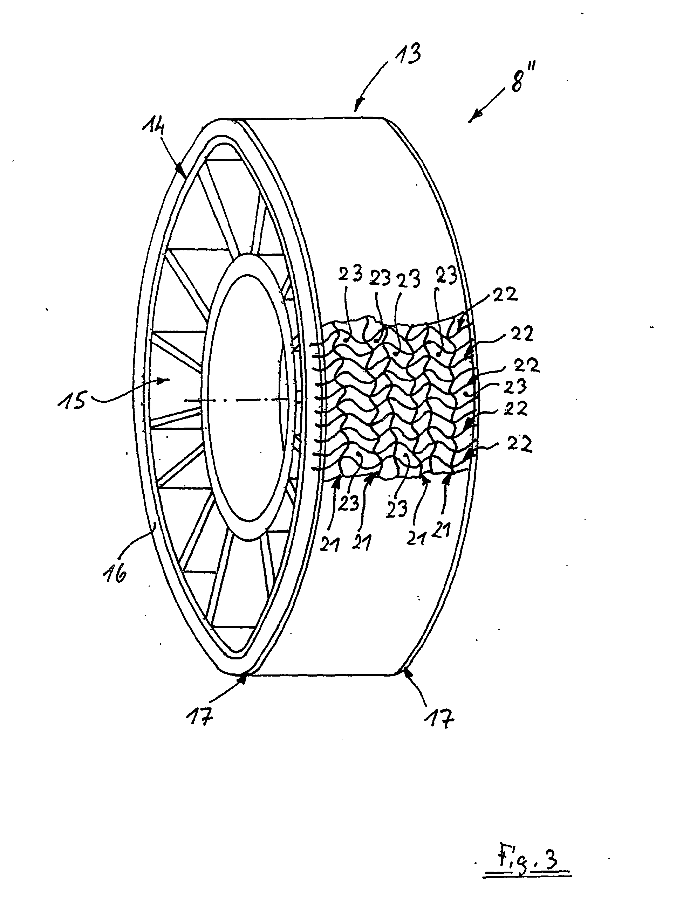

Fig.3 zeigt ein Reibrad 8" mit einer lediglich abschnittsweise dargestellten Lauffläche 13, bei der mittels unterschiedlich gerichteten Drainagenuten 21 und 22 von jeweils wellenförmigen Verlauf in einer kreuzenden Anordnung in der Lauffläche 13 ein Profil von einzeln stehenden Klötzen 23 gebildet ist. Beispielsweise verrundete Schultern 17 schließen an die Lauffläche 13 mit Kotzprofil 23 an. Dieses Klotzprofil 23 mit sehr schmalen Drainagenuten 21 und 22 ist akustisch vorteilhaft und weist in der Lauffläche 13 einen hohen Traganteil auf.

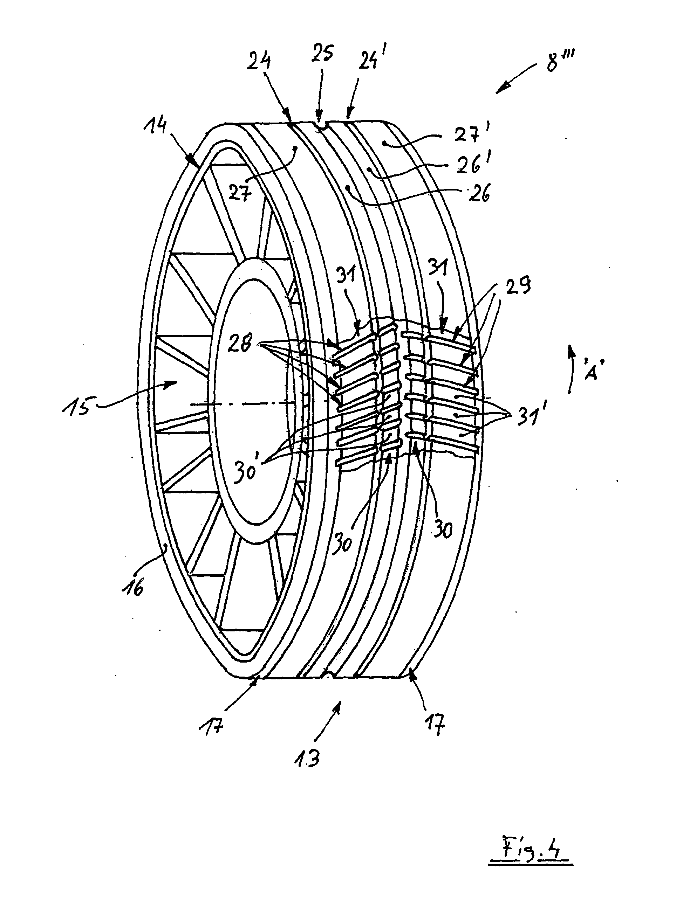

Schließlich zeigt Fig.4 ein Reibrad 8"', bei dem die Lauffläche 13 im Mittenbereich mittels unterschiedlich breit gestalteter Umfangs -Drainagenuten 24, 25 und 24' in zwei relativ schmale Mittenstreifen 26, 26' und in zwei relativ breite Seitenstreifen 27,27' unterteilt ist. Über in Laufrichtung -Pfeil A - gepfeilt angeordnete Quer - Drainagenuten 28, 29 ist in den Mittenstreifen 26, 26' ein Profil 30 mit etwa quadratischen Klötzen 30' und in den Seitenstreifen 27,27' ein Streifenprofil 31 mit länglich rechteckigen Klötzen 31' ausgebildet. Zur Erzielung einer wirksamen Drainage ist die Gruppe der linken Draingenuten 28 in Laufrichtung gegen die Gruppe der rechten Drainagenuten 29 versetzt angeordnet. Diese Gestaltung der Reibrad - Lauffläche 13 findet bevorzugt Anwendung bei einem hohen Spritzwasseranfall.

Mit der Erfindung ist ein verbesserter Kraftschluss zwischen dem jeweiligen Reibrad und dem Riemen des Aggregate - Riementriebes erzielt.

## Patentansprüche

1. Reibradgetriebe für ein von einem Aggregate - Riementrieb einer Brennkraftmaschine gesondert angeordnetes Nebenaggregat,
**dadurch gekennzeichnet,**
- **dass** ein Reibrad (8,8',8", 8"') über eine Lauffläche (13) einerseits mit der Außenseite (7) des Riementrieb - Riemens (5) und andererseits mit einem Antriebsrad (9) des Nebenaggregates (4) in reibschlüssiger Antriebsverbindung steht,
- **dass** das Reibrad (8,8',8", 8'") am Außenumfang (14) eines Radkörpers (15) mit einem aus flüssigkeitsabstoßenden Gummi, Kunststoff oder Elastomer gebildeten Reifen (16) ausgerüstet ist, dessen
- Lauffläche (13) mittels zumindest einer Drainagenut (18,18';21,22:24,25,24' 28,29) in Laufflächenbereiche unterteilt ist, wobei ferner
- die Lauffläche (13) in den Randbereichen bzw. Schultern (17) des Reifens (16) abgeschrägt oder verrundet ist.

2. Reibradgetriebe nach Anspruch 1, **dadurch gekennzeichnet,**
- **dass** die Reibrad - Lauffläche (13) durch mindestens eine in Umfangsrichtung des Reibrades (8',8", 8"') verlaufend angeordnete Drainagenut (18,18';21;24, 25,24') in getrennte Laufflächenbereiche unterteilt ist.

3. Reibradgetriebe nach Anspruch 1, **dadurch gekennzeichnet,**
- **dass** die Reibrad - Lauffläche (13) mittels quer zur Umfangsrichtung des Reibrades (8",8"') verlaufend angeordnete Drainagenuten (22;28,29) in getrennte Laufflächenbereiche unterteilt ist.

4. Reibradgetriebe nach Anspruch 2 und 3, **dadurch gekennzeichnet,**
- **dass** die Lauffläche (13) mittels mindestens einer in Umfangsrichtung verlaufenden Drainagenut (18,18';21;24,25,24') in Kombination mit quer gerichtet angeordneten Drainagenuten (22;28,29) in getrennte Laufflächenbereiche unterteilt ist.

5. Reibradgetriebe nach Anspruch 4, **dadurch gekennzeichnet,**
- **dass** mittels unterschiedlich gerichteten Drainagenuten (18, 1.8';21,22;24,25, 24';28,29) in einer miteinander verbundenen bzw. kreuzenden Anordnung unterschiedliche Laufflächenbereiche mit einem Klotzprofil (23,30) und / oder einem Streifenprofil (31) gebildet sind.

6. Reibradgetriebe nach Anspruch 2, **dadurch gekennzeichnet,**
- **dass** die Lauffläche (13) des Reibrades (8') mittels zweier axial beabstandeter Umfangs - Drainagenuten (18,18') in einen relativ breiten Mittelstreifen (19) und zwei relativ schmale Seitenstreifen (20,20') als jeweils ringförmige Laufflächenbereiche unterteilt ist, wobei
- an die Seitenstreifen (20,20') jeweils eine abgeschrägte oder verrundete Schulter (17) anschließt.

7. Reibradgetriebe nach Anspruch 5, **dadurch gekennzeichnet,**
- **dass** mittels unterschiedlich gerichteten Drainagenuten (21,22) von jeweils elkenförmigern Verlauf in einer kreuzenden Anordnung in der Lauffläche, (13) des Reibrades (8") ein Klotzprofil (23) gebildet ist.

8. Reibradgetriebe nach Anspruch 5, **dadurch gekennzeichnet,**
- **dass** die Lauffläche (13) des Reibrades (8"') im Mittenbereich mittels unterschiedlich breit gestalteter Umfangs - Drainagenuten (24,25,24') in zwei relativ schmale Mittelstreifen (26,26') und
- in zwei relativ breite Seitenstreifen (27,27') unterteilt ist, wobei über
- in Laufrichtung des Reibrades (8"') gepfeilt angeordnete Quer - Drainagenuten (28,29) in den Mittenstreifen (26,26') ein Klotzprofil (30) und in den Seitenstreifen (27,27') ein Streifenprofil (31) ausgebildet ist.

## Claims

1. A friction drive for an auxiliary unit arranged separately from a unit belt drive of an internal combustion engine, **characterised in that**
- a friction wheel (8, 8', 8", 8"') is in frictional drive connection via a contact surface (13), on the one hand, with the outside (7) of the belt drive belt (5) and, on the other hand, with a drive wheel (9) of the auxiliary unit (4),
- **in that** the friction wheel (8, 8', 8", 8"') is equipped at the outer periphery (14) of a wheel body (15) with a tyre (16) formed from liquid-repellent rubber, plastics material or elastomer, of which
- the contact surface (13) is divided by means of at least one drainage groove (18, 18'; 21, 22; 24, 25, 24', 28, 29) into contact surface regions, wherein, furthermore,
- the contact surface (13) is bevelled or rounded in the edge regions or shoulders (17) of the tyre (16).

2. A friction drive according to claim 1, **characterised in that**
- the friction wheel contact surface (13) is divided by at least one drainage groove (18, 18'; 21; 24, 25, 24') arranged running in the peripheral direction of the friction wheel (8', 8", 8"') into separate contact surface regions.

3. A friction drive according to claim 1, **characterised in that**
- the friction wheel contact surface (13) is divided by means of drainage grooves (22; 28, 29) arranged running transversely to the peripheral direction of the friction wheel (8", 8"') into separate contact surface regions.

4. A friction drive according to claim 2 and 3, **characterised in that**
- the contact surface (13) is divided by means of at least one drainage groove (18, 18'; 21; 24, 25, 24') extending in the peripheral direction in combination with drainage grooves (22; 28, 29) arranged directly transversely into separate contact surface regions.

5. A friction drive according to claim 4, **characterised in that**
- different contact surface regions with a block profile (23, 30) and/or a strip profile (31) are formed by means of differently directed drainage grooves (18, 18'; 21, 22; 24, 25, 24'; 28, 29) in an arrangement connected to or crossing one another.

6. A friction drive according to claim 2, **characterised in that**
- the contact surface (13) of the friction wheel (8') is divided by means of two axially spaced apart peripheral drainage grooves (18, 18') into a relatively broad central strip (19) and two relatively narrow side strips (20, 20') as respective annular contact surface regions, wherein
- a bevelled or rounded shoulder (17) adjoins the side strips (20, 20') in each case.

7. A friction drive according to claim 5, **characterised in that**
- a block profile (23) is formed by means of differently directed drainage grooves (21, 22) with a respective wave-like course in a crossing arrangement in the contact surface (13) of the friction wheel (8").

8. A friction drive according to claim 5, **characterised in that**
- the contact surface (13) of the friction wheel (8"') is divided in the central region by means of peripheral drainage grooves (24, 25, 24') of different width into two relatively narrow central strips (26, 26') and
- into two relatively wide side strips (27, 27'), wherein
- a block profile (30) is formed by means of transverse drainage grooves (28, 29) with an arrow arrangement in the running direction of the friction wheel (8"') in the centre strips (26, 26') and a strip profile (31) is formed in the side strips (27, 27').

## Revendications

1. Transmission à roue à friction pour une unité auxiliaire installée séparément d'une unité d'entraînement à courroie d'un moteur à combustion,
**caractérisée en ce qu'**
- une roue à friction (8, 8', 8", 8"') est en contact d'entraînement par une surface de roulement (13) d'une part avec le côté extérieur (7) de la courroie (5) de l'entraînement à courroie et d'autre part, avec une roue d'entraînement (9) de l'unité auxiliaire (4) sous la forme d'une liaison d'entraînement par friction,
- la périphérie extérieure (14) de la roue à friction (8, 8', 8", 8"') est munie d'un corps de roue (15) avec un bandage (16) repoussant le liquide, en caoutchouc, matière plastique ou élastomère, et dont
- la surface de roulement (13) est subdivisée par une rainure de drainage (18, 18', 21, 22, 24, 25, 24', 28, 29) en zones de surface de circulation, et en outre
- la surface de roulement (13) est inclinée ou arrondie dans les zones marginales ou les talons (17) du bandage (16).

2. Transmission à roue à friction selon la revendication 1,
**caractérisée en ce que**
- la surface de roulement (13) de la roue à friction est subdivisée par au moins une rainure de drainage dans la direction périphérique de la roue à friction (8', 8", 8"'), des rainures de drainage (18, 18', 21, 24, 25, 24'), pour former des zones distinctes de surfaces de roulement.

3. Transmission à roue à friction selon la revendication 1,
**caractérisée en ce que**
la surface de roulement (13) de la roue à friction est subdivisée en zones de surface de roulement distinctes par des rainures de drainage (22, 28, 29) dirigées transversalement à la direction périphérique de la roue à friction (8", 8"').

4. Transmission à roue à friction selon les revendications 2 et 3,
**caractérisée en ce que**
- la surface de roulement (13) est subdivisée par au moins une rainure de drainage (18, 18', 21, 24, 25, 24') dans la direction périphérique combinée à des rainures de drainage (22, 28, 29) dirigées transversalement en des zones de surface de roulement.

5. Transmission à roue à friction selon la revendication 4,
**caractérisée en ce qu'**
- des rainures de drainage (18, 18', 21, 22, 24, 25, 24', 28, 29), dirigées différemment, suivant une disposition reliée ou croisée, forment des zones de surface de roulement différentes avec un profil en forme de coin (23, 30) et/ou un profil en forme de bande (31).

6. Transmission à roue à friction selon la revendication 2,
**caractérisée en ce que**
- la surface de roulement (13) de la roue à friction (8') est subdivisée par l'intermédiaire de deux rainures de drainage (18, 18'), périphériques, écartées axialement, en une bande centrale (19) relativement large et deux bandes latérales (20, 20') relativement étroites comme zones de surface de circulation annulaire, respectives, et
- les bandes latérales (20, 20') se poursuivant chacune par un talon (17) incliné ou arrondi.

7. Transmission à roue à friction selon la revendication 5,
**caractérisée en ce qu'**
- des rainures de drainage (21, 22) de direction différente avec un tracé respectif ondulé, et une disposition croisée dans la surface de roulement (13) de la roue à friction (8"), forment un profil en coin (23).

8. Transmission à roue à friction selon la revendication 5,
**caractérisée en ce que**
- la surface de roulement (13) de la roue à friction (8"') présente dans sa zone médiane, deux bandes médianes (26, 26') relativement étroites grâce à des rainures de drainage périphériques (24, 25, 24') de largeur différente, et
- en deux bandes latérales (27, 27') relativement larges, et par les rainures de drainage (28, 29) dirigées transversalement et en pointe par rapport à la direction de circulation de la roue à friction (8"'), on forme dans les bandes médianes (26, 26') un profil en forme de coin (30), et dans les bandes latérales (27, 27'), un profil en bande (31).
